# EUROPEAN PATENT APPLICATION

(11) **EP 3 919 190 A1**
(43) Date of publication of application: **08.12.2021**
(21) Application number: 20749570.6
(22) Date of filing: 10.01.2020
(51) Int. Cl.: B05D 7/24, C08F 220/22, C09D 127/12, C09D 133/16

(54) **FLUORINE-CONTAINING POLYMER, COATING COMPOSITION, METHOD FOR PRODUCING COATED ARTICLE, AND COATED ARTICLE**

(30) Priority: 30.01.2019 CN 201910090833
(71) Applicant: DAIKIN INDUSTRIES, LTD., Osaka-shi, Osaka 530-8323 (JP)
(72) Inventor: MINAMI, Shinichi, Shanghai 200040 (CN); ENOMOTO, Takashi, Osaka-shi, Osaka 530-8323 (JP); YAMAMOTO, Ikuo, Osaka-shi, Osaka 530-8323 (JP); ZENG, Xin, Shanghai 200040 (CN)
(74) Representative: Hoffmann Eitle
(86) International application number: PCT/JP2020/000741
(87) International publication number: WO 2020/158354

(57) **Abstract**

Provided is a coating composition that can enables to form a coating film having an excellent antifouling property using a fluorine-containing polymer having repeating units derived from (a) a fluorine-containing monomer, (b) a fluorine-free non-crosslinkable monomer, and (c) a fluorine-free crosslinkable monomer, wherein the fluorine-containing monomer (a) is a compound represented by formula: CH₂=C (-X) -C (=O) -Y-Z-Rf ... (a-I) wherein X is a hydrogen atom, a monovalent organic group or a halogen atom, Y is -O- or -NH-, Z is a direct bond or a divalent organic group, Rf is a fluoroalkyl group having 1 to 20 carbon atoms, and wherein the fluorine-free non-crosslinkable monomer (b) comprises (b1) a cyclic hydrocarbon group-containing monomer and (b2) a low Tg monomer, a homopolymer of which has a glass transition temperature (Tg) of lower than 0°C.

## Description

### Technical Field

The present disclosure relates to a fluorine-containing polymer, a coating composition, a method for producing a coated article by using the coating composition, and the coated article.

### Background Art

Conventionally, products such as metals, inorganics, plastics, wood, paper, leather, and fibers have been surface-coated for the purpose of protecting the surfaces thereof and imparting the design properties and functionality, and various coating materials have been developed.

JPB 4213257 discloses an antifouling property coating material and varnish by using a fluorine-containing copolymer composed of 15 to 85 mol% of a fluoro olefin, 0.1 to 20 mol% of a perfluoroalkyl acrylate-based monomer, and 2 to 50 mol% of hemiacetal ester.

International Publication No. WO2017/183409 discloses a water-based coating composition comprising a fluorine-containing monomer in which the α-position thereof is a hydrogen atom, and a fluorine-containing acrylic polymer having a repeating unit derived from a butyl acrylate fluorine-free monomer.

### Prior Art Literature

### Patent Literature

Patent Literature 1: JPB 4213257
Patent Literature 2: International Publication No. WO2017/183409

### Summary of Invention

### Technical Problem

One of the objects of the present disclosure is to provide a polymer for use in a coating composition that enables to form a coating film having an excellent antifouling property.

### Solution to Problem

Embodiments of the present disclosure are as follows.

### [Item 1]

A fluorine-containing polymer having repeating units derived from
(a) a fluorine-containing monomer,
(b) a fluorine-free non-crosslinkable monomer, and
(c) a fluorine-free crosslinkable monomer,
wherein the fluorine-containing monomer (a) is a compound represented by formula:

CH₂=C(-X)-C(=O)-Y-Z-Rf ... (a-I)

wherein X is a hydrogen atom, a monovalent organic group or a halogen atom,
Y is -O- or -NH-,
Z is a direct bond or a divalent organic group,
Rf is a fluoroalkyl group having 1 to 20 carbon atoms, and
wherein the fluorine-free non-crosslinkable monomer (b) comprises
(b1) a cyclic hydrocarbon group-containing monomer and
(b2) a low Tg monomer, a homopolymer of which has a glass transition temperature (Tg) of lower than 0°C.

### [Item 2]

The fluorine-containing polymer according to [Item 1], wherein in the fluorine-containing monomer (a) represented by formula (a-I), X is a hydrogen atom and the number of carbon atoms of Rf is 1 to 6.

### [Item 3]

The fluorine-containing polymer according to item 1 or 2, wherein in the cyclic hydrocarbon group-containing monomer (b1), the cyclic hydrocarbon group has 4 to 30 carbon atoms.

### [Item 4]

The fluorine-containing polymer according to item 1 or 2, wherein in the monomer (b1), the cyclic hydrocarbon group is at least one selected from the group consisting of a cyclohexyl group, a t-butylcyclohexyl group, an adamantyl group, a 2-methyl-2-adamantyl group, a 2-ethyl-2-adamantyl group, a bornyl group, an isobornyl group, a norbornyl group, a dicyclopentanyl group, a dicyclopentenyl group, a benzyl group, a phenyl group, a naphthyl group, a 2-t-butylphenyl group, and residues obtained by removing one or more hydrogen atoms from these groups.

### [Item 5]

The fluorine-containing polymer according to any one of items 1 to 4, wherein the monomer (b2) is a monomer, a homopolymer of which has a glass transition temperature of lower than 0°C, and is represented by formula:

CH₂=CX²-C(=O)-Y²-Z² ... (b2-I)

wherein X² is a hydrogen atom, a monovalent organic group or a halogen atom,
Y² is -O- or -NH-, and
Z² is a linear or branched chain aliphatic hydrocarbon group having 1 to 30 carbon atoms.

### [Item 6]

The fluorine-containing polymer according to any one of items 1 to 5, wherein the fluorine-free crosslinkable monomer (c) is a compound represented by formula:

CH₂=CX³-C(=O)-Y³-Z³-W³ ... (c-I)

wherein X³ is a hydrogen atom, a methyl group or a halogen atom,
Y³ is a direct bond, -O- or -NH-,
Z³ is a direct bond or a divalent organic group, and
W³ is a hydroxyl group, an epoxy group, a chloromethyl group, a blocked isocyanate group, an amino group, a carboxyl group, a hydrazide group or a melamine group.

### [Item 7]

The fluorine-containing polymer according to [Item 6], wherein the fluorine-free crosslinkable monomer (c) comprises both of
a compound of formula (c-I) wherein Z³ is a linear or branched chain alkylene group having 1 to 20 carbon atoms and W³ is a hydroxyl group, and
a compound of formula (c-I) wherein Y³ and Z³ are direct bonds and W³ is a hydroxyl group, or a compound of formula (c-I) wherein W³ is a carboxyl group.

### [Item 8]

The fluorine-containing polymer according to any one of items 1 to 7, wherein an amount of the fluorine-containing monomer (a) is 30% by weight or less with respect to the polymer.

### [Item 9]

The fluorine-containing polymer according to any one of items 1 to 8, wherein an amount of the fluorine-free non-crosslinkable monomer (b) is 10 to 75% by weight with respect to the polymer, and an amount of the fluorine-free crosslinkable monomer (c) is 10 to 75% by weight with respect to the polymer.

### [Item 10]

The fluorine-containing polymer according to any one of [Item 2] to [Item 9], wherein an amount of the monomer (b2) is 3 to 50 parts by weight with respect to 100 parts by weight of the monomer (b1).

### [Item 11]

A coating composition, comprising
(1) the fluorine-containing polymer according to any one of [Item 1] to [Item 10], and
(2) a liquid medium.

### [Item 12]

The coating composition according to [Item 11], comprising
at least one of (4) a curing agent,
wherein an amount of a surfactant (3) is 0.5 to 20 parts by weight with respect to 100 parts by weight of a monomer,
wherein the curing agent (4) is a polyisocyanate compound, and an equivalent ratio (NCO/OH) of an isocyanate group in the polyisocyanate compound to a hydroxyl group in the fluorine-containing polymer is 0.5 to 2.5.

### [Item 13]

A method for producing a coated article, comprising coating an article with the coating composition according to item 11 or 12.

### [Item 14]

A coated article having a coating film having a thickness of 30 µm or less formed from the coating composition of item 11 or 12.

### Advantageous Effects of Invention

The coating composition comprising the fluorine-containing polymer of the present disclosure can impart an excellent water- and oil- repellency, antifouling property and soil releasability by coating a substrate, in particular an excellent antifouling property and soil releasability to oily stains (for example, oleic acid, lactic acid). The fluorine-containing polymer can exhibit the excellent effects even when the fluorine-containing polymer comprises only a small amount of repeating units derived from the fluorine-containing monomer and the coating film is a thin film.

### Description of Embodiments

### (1) Fluorine-containing polymer

The fluorine-containing polymer in the present disclosure has repeating units derived from (a) a fluorine-containing monomer, (b) a fluorine-free non-crosslinkable monomer, and (c) a fluorine-free crosslinkable monomer. The fluorine-containing polymer is preferably an acrylic polymer. The fluorine-containing polymer forms a varnish or vehicle of the coating composition.

### (a) Fluorine-containing monomer

The fluorine-containing monomer is a polymerizable compound having a fluoroalkyl group and an acryloylgroup or a methacryloyl group or an α-substituted acryloyl group. The "α-substituted acryloyl group" refers to a group in which the hydrogen atom at the α-position of the acryloyl group is substituted with a group such as a monovalent organic group or a halogen atom. The fluoroalkyl group is preferably a perfluoroalkyl group and has 1 to 20 carbon atoms. The fluoroalkenyl group is preferably a perfluoroalkenyl group and has 2 to 6 carbon atoms.

Fluorine-containing monomer (a) is a compound represented by the formula:

CH₂=C(-X)-C(=O)-Y-Z-Rf ... (a-I)

wherein X is a hydrogen atom, a monovalent organic group or a halogen atom,
Y is -O- or -NH-,
Z is a direct bond or a divalent organic group, and
Rf is a fluoroalkyl group having 1 to 20 carbon atoms.

In formula (a-I) of fluorine-containing monomer (a), X is a hydrogen atom, a monovalent organic group or a halogen atom. X may be a hydrogen atom, a linear or branched chain alkyl group having 1 to 21 carbon atoms, a fluorine atom, a chlorine atom, a bromine atom, an iodine atom, and a CFX¹X² group wherein X¹ and X² are hydrogen atoms, fluorine atoms, chlorine atoms, bromine atoms or iodine atoms, or a cyano group, a linear or branched chain fluoroalkyl group having 1 to 21 carbon atoms, a substituted or unsubstituted benzyl group, or a substituted or unsubstituted phenyl group. X is preferably a hydrogen atom, a methyl group, a fluorine atom, or a chlorine atom, and particularly preferably a hydrogen atom.

Y is preferably -O-.

Z may be, for example, a direct bond, a linear or branched chain aliphatic group having 1 to 20 carbon atoms (in particular an alkylene group), for example, a group represented by the formula: -(CH₂)ₓ- wherein x is 1 to 10, or a group represented by the formula: -R²(R¹)N-SO₂- or a group represented by the formula: -R²(R¹)N-CO-wherein R¹ is an alkyl group having 1 to 10 carbon atoms and R² is a linear alkylene group or a branched alkylene group having 1 to 10 carbon atoms, or a group represented by the formula: -CH₂CH(OR³)CH₂-(Ar-O)ₚ-, wherein R³ is a hydrogen atom, or an acyl group having 1 to 10 carbon atoms (for example, formyl or acetyl), Ar is an arylene group having a substituent if necessary, and p is 0 or 1, or a group represented by the formula: -CH₂-Ar-(O)_{q}-, wherein Ar is an arylene group having a substituent if necessary, and q is 0 or 1, a -(CH₂)ₘ-SO₂-(CH₂)ₙ- group or a -(CH₂)ₘ-S-(CH₂)ₙ- group, wherein m is 1 to 10 and n is 0 to 10.

Z is preferably an aliphatic group having 1 to 10 carbon atoms, an aromatic group or a cycloaliphatic group, having 6 to 18 carbon atoms,
a -CH₂CH₂N(R¹)SO₂- group, wherein R¹ is an alkyl group having 1 to 4 carbon atoms,
a -CH₂CH(OZ¹)CH₂-(Ph-O)ₚ- group, wherein Z¹ is a hydrogen atom or an acetyl group, Ph is a phenylene group, and p is 0 or 1, a -(CH₂)ₙ-Ph-O- group, wherein Ph is a phenylene group and n is 0 to 10, a -(CH₂)ₘ-SO₂-(CH₂)ₙ-group or a -(CH₂)ₘ-S-(CH₂)ₙ- group, wherein m is 1 to 10 and n is 0 to 10. The aliphatic group is preferably an alkylene group (in particular the number of carbon atoms is 1 to 4, for example, 1 or 2). The aromatic group or a cycloaliphatic group may be substituted or unsubstituted. The S group or SO₂ group may be directly bonded to the Rf group.

The Rf group is preferably a perfluoroalkyl group. The number of carbon atoms of the Rf group is 1 to 20, preferably 1 to 6, more preferably 4 to 6, and particularly 6. A fluorine-containing monomer that has an Rf group having 1 to 20 carbon atoms may be used, but the fluorine-containing monomer is preferably composed only of a compound that has an Rf group having 4 to 6 carbon atoms, particularly 6. The Rf group is, for example, -CF₃, -CF₂CF₃, -CF₂CF₂CF₃, -CF(CF₃)₂, -CF₂CF₂CF₂CF₃, -CF₂CF(CF₃)₂, -C(CF₃)₃, -(CF₂)₄CF₃, - (CF₂)₂CF(CF₃)₂, - CF₂C(CF₃)₃, -CF(CF₃)CF₂CF₂CF₃, -(CF₂)₅CF₃, -(CF₂)₃CF(CF₃)₂, - (CF₂)₄CF(CF₃)₂, -C₈F₁₇, etc.

Fluorine-containing monomer (a) is preferably represented by formula (a-I) wherein X is hydrogen and the number of carbon atoms of Rf is 1 to 6 (for example, 4 to 6).

Specific examples of fluorine-containing monomer (a) include the following, but it is not limited thereto.

CH₂=C(-H)-C(=O)-O-(CH₂)₂-Rf

CH₂=C(-H)-C(=O)-O-C₆H₄-Rf

CH₂=C(-Cl)-C(=O)-O-(CH₂)₂-Rf

CH₂=CH)-C(=O)-O-(CH₂)₂NCH₃)SO₂-Rf

CH₂=CH)-C(=O)-O-(CH₂)₂NC₂H₅)SO₂-Rf

CH₂=C(-H)-C(=O)-O-CH₂CH(-OH)CH₂-Rf

CH₂=C(-H)-C(=O)-O-CH₂CH(-OCOCH₃)CH₂-Rf

CH₂=C(-H)-C(=O)-O-(CH₂)₂-S-Rf

CH₂=C(-H)-C(=O)-O-(CH₂)₂-S-(CH₂)₂-Rf

CH₂=C(-H)-C(=O)-O-(CH₂)₃-SO₂-Rf

CH₂=C(-H)-C(=O)-O-(CH₂)₂-SO₂-(CH₂)₂-Rf

CH₂=C(-H)-C(=O)-NH-(CH₂)₂-Rf

CH₂=C(-CH₃)-C(=O)-O-(CH₂)₂-Rf

CH₂=C(-CH₃)-C(=O)-O-C₆H₄-Rf

CH₂=C(-CH₃)-C(=O)-O-(CH₂)₂N(-CH₃)SO₂-Rf

CH₂=C(-CH₃)-C(=O)-O-(CH₂)₂N(-C₂H₅)SO₂-Rf

CH₂=C(-CH₃)-C(=O)-O-CH₂CH(-OH)CH₂-Rf

CH₂=C(-CH₃)-C(=O)-O-CH₂CH(-OCOCH₃)CH₂-Rf

CH₂=C(-CH₃)-C(=O)-O-(CH₂)₂-S-Rf

CH₂=C(-CH₃)-C(=O)-O-(CH₂)₂-S-(CH₂)₂-Rf

CH₂=C(-CH₃)-C(=O)-O-(CH₂)₃-SO₂-Rf

CH₂=C(-CH₃)-C(=O)-O-(CH₂)₂-SO₂-(CH₂)₂-Rf

CH₂=C(-CH₃)-C(=O)-NH-(CH₂)₂-Rf

CH₂=C(-F)-C(=O)-O-(CH₂)₂-S-Rf

CH₂=C(-F)-C(=O)-O-(CH₂)₂-S-(CH₂)₂-Rf

CH₂=C(-F)-C(=O)-O-(CH₂)₂-SO₂-Rf

CH₂=C(-F)-C(=O)-O-(CH₂)₂-SO₂-(CH₂)₂-Rf

CH₂=C(-F)-C(=O)-NH- (CH₂)₂-Rf

CH₂=C(-Cl)-C(=O)-O-(CH₂)₂-S-Rf

CH₂=C(-Cl)-C(=O)-O-(CH₂)₂-S-(CH₂)₂-Rf

CH₂=C(-Cl)-C(=O)-O-(CH₂)₂-SO₂-Rf

CH₂=C(-Cl)-C(=O)-O-(CH₂)₂-SO₂-(CH₂)₂-Rf

CH₂=C(-Cl)-C(=O)-NH- (CH₂)₂-Rf

CH₂=C(-CF₃)-C(=O)-O-(CH₂)₂-S-Rf

CH₂=C(-CF₃)-C(=O)-O-(CH₂)₂-S-(CH₂)₂-Rf

CH₂=C(-CF₃)-C(=O)-O-(CH₂)₂-SO₂-Rf

CH₂=C(-CF₃)-C(=O)-O-(CH₂)₂-SO₂-(CH₂)₂-Rf

CH₂=C(-CF₃)-C(=O)-NH-(CH₂)₂-Rf

CH₂=C(-CF₂H)-C(=O)-O-(CH₂)₂-S-Rf

CH₂=C(-CF₂H)-C(=O)-O-(CH₂)₂-S-(CH₂)₂-Rf

CH₂=C(-CF₂H)-C(=O)-O-(CH₂)₂-SO₂-Rf

CH₂=C(-CF₂H)-C(=O)-O- (CH₂)₂-SO₂- (CH₂)₂-Rf

CH₂=C(-CF₂H)-C(=O)-NH-(CH₂)₂-Rf

CH₂=C(-CN)-C(=O)-O-(CH₂)₂-S-Rf

CH₂=C(-CN)-C(=O)-O-(CH₂)₂-S-(CH₂)₂-Rf

CH₂=C(-CN)-C(=O)-O-(CH₂)₂-SO₂-Rf

CH₂=C(-CN)-C(=O)-O-(CH₂)₂-SO₂-(CH₂)₂-Rf

CH₂=C(-CN)-C(=O)-NH-(CH₂)₂-Rf

CH₂=C(-CF₂CF₃)-C(=O)-O-(CH₂)₂-S-Rf

CH₂=C(-CF₂CF₃)-C(=O)-O-(CH₂)₂-S-(CH₂)₂-Rf

CH₂=C(-CF₂CF₃)-C(=O)-O-(CH₂)₂-SO₂-Rf

CH₂=C(-CF₂CF₃)-C(=O)-O-(CH₂)₂-SO₂-(CH₂)₂-Rf

CH₂=C(-CF₂CF₃)-C(=O)-NH-(CH₂)₂-Rf

CH₂=C(-F)-C(=O)-O-(CH₂)₃-S-Rf

CH₂=C(-F)-C(=O)-O-(CH₂)₃-S-(CH₂)₂-Rf

CH₂=C(-F)-C(=O)-O-(CH₂)₃-SO₂-Rf

CH₂=C(-F) -C(=O)-O-(CH₂)₃-SO₂-(CH₂)₂-Rf

CH₂=C(-F)-C(=O)-NH-(CH₂)₃-Rf

CH₂=C(-Cl)-C(=O)-O-(CH₂)₃-S-Rf

CH₂=C(-Cl)-C(=O)-O-(CH₂)₃-S-(CH₂)₂-Rf

CH₂=C(-Cl)-C(=O)-O-(CH₂)₃-SO₂-Rf

CH₂=C(-Cl)-C(=O)-O-(CH₂)₃-SO₂-(CH₂)₂-Rf

CH₂=C(-CF₃)-C(=O)-O-(CH₂)₃-S-Rf

CH₂=C(-CF₃)-C(=O)-O-(CH₂)₃-S-(CH₂)₂-Rf

CH₂=C(-CF₃)-C(=O)-O-(CH₂)₃-SO₂-Rf

CH₂=C(-CF₃)-C(=O)-O-(CH₂)₃-SO₂-(CH₂)₂-Rf

CH₂=C(-CF₂H)-C(=O)-O-(CH₂)₃-S-Rf

CH₂=C(-CF₂H)-C(=O)-O-(CH₂)₃-S-(CH₂)₂-Rf

CH₂=C(-CF₂H)-C(=O)-O-(CH₂)₃-SO₂-Rf

CH₂=C(-CF₂H)-C(=O)-O-(CH₂)₃-SO₂-(CH₂)₂-Rf

CH₂=C(-CN)-C(=O)-O-(CH₂)₃-S-Rf

CH₂=C(-CN)-C(=O)-O-(CH₂)₃-S-(CH₂)₂-Rf

CH₂=C(-CN)-C(=O)-O-(CH₂)₃-SO₂-Rf

CH₂=C(-CN)-C(=O)-O-(CH₂)₃-SO₂-(CH₂)₂-Rf

CH₂=C(-CF₂CF₃)-C(=O)-O-(CH₂)₃-S-Rf

CH₂=C(-CF₂CF₃)-C(=O)-O-(CH₂)₃-S-(CH₂)₂-Rf

CH₂=C(-CF₂CF₃)-C(=O)-O-(CH₂)₃-SO₂-Rf

CH₂=C(-CF₂CF₃)-C(=O)-O-(CH₂)₂-SO₂-(CH₂)₂-Rf

wherein in the above formula, Rf is a fluoroalkyl group having 1 to 20 carbon atoms, for example, 4 to 6 carbon atoms.

### (b) Fluorine-free non-crosslinkable monomer

In the present disclosure, the fluorine-containing polymer has a repeating unit derived from fluorine-free non-crosslinkable monomer (b). Fluorine-free non-crosslinkable monomer (b) is a monomer comprising no fluorine atom. Fluorine-free non-crosslinkable monomer (b) has one olefinically unsaturated carbon-carbon double bond (polymerizable group) and has no crosslinkable functional group. The crosslinkable functional group referred to herein may means that it does not have a hydroxyl group, an epoxy group, a chloromethyl group, a blocked isocyanate group, an amino group, a carboxyl group, a ketone group, a hydrazide group or a melamine group, and in particular, the hydroxyl group, the epoxy group, the chloromethyl group, the blocked isocyanate group, the amino group or the carboxyl group.

Fluorine-free non-crosslinkable monomer (b) comprises
(b1) a cyclic hydrocarbon group-containing monomer and
(b2) a low Tg monomer, the homopolymer of which has a glass transition temperature (Tg) of lower than 0°C. Fluorine-free non-crosslinkable monomer (b) may be composed of monomers (b1) and (b2). Fluorine-free non-crosslinkable monomer (b) is preferably (meth)acrylate or a (meth)acrylamide monomer.

### (b1) Cyclic hydrocarbon group-containing monomer

Cyclic hydrocarbon group-containing monomer (b1) is a monomer having a cyclic hydrocarbon group and a carbon-carbon double bond (ethylenically unsaturated double bond). The cyclic hydrocarbon group-containing monomer is preferably (meth)acrylate having a cyclic hydrocarbon group in particular it may be methacrylate. The (meth)acrylate having a cyclic hydrocarbon group may be a compound having a (preferably monovalent) cyclic hydrocarbon group and a monovalent (meth)acrylate group. The cyclic hydrocarbon group and the (meth)acrylate group are preferably directly bonded. Preferably the carbon atom in the ring of the cyclic hydrocarbon group is directly bonded to the ester group in the (meth)acrylate group.

The cyclic hydrocarbon group is saturated or unsaturated, and is preferably saturated. The cyclic hydrocarbon group may be a monocyclic group, a polycyclic group, or a bridged ring group, and the bridged ring group is preferred. The cyclic group may have a chain group (for example, a linear or branched chain hydrocarbon group).

The number of carbon atoms of the cyclic hydrocarbon group may be 4 to 30, for example, 6 to 20. The number of carbon atoms of the cyclic hydrocarbon group may be 15 or less, for example 12 or less or 10 or less. The cyclic hydrocarbon group may be an aliphatic group, for example, an alkyl group. Examples of the cyclic hydrocarbon group include a cycloaliphatic group having 4 to 20 carbon atoms, in particular 5 to 12 carbon atoms, an aromatic group having 6 to 20 carbon atoms, and an aromatic aliphatic group having 7 to 20 carbon atoms.

Cyclic hydrocarbon group-containing monomer (b1) is a monomer, the homopolymer of which has a high glass transition temperature, and the glass transition temperature may be 50°C or higher, for example, 80°C or higher, preferably 100°C or higher, particularly 125°C or higher, and specially 150°C or higher.

Specific examples of the cyclic hydrocarbon group include a cyclohexyl group, a t-butylcyclohexyl group, an adamantyl group, a 2-methyl-2-adamantyl group, a 2-ethyl-2-adamantyl group, a bornyl group, an isobornyl group, a norbornyl group, a dicyclopentanyl group, a dicyclopentenyl group, a benzyl group, a phenyl group, a naphthyl group, a 2-t-butylphenyl group, residues obtained by removing one or more hydrogen atoms from these groups (for example, a cyclohexylene group, an adamantilene group, a phenylene group, a naphthylene group, etc.), and groups that are substitutes of these groups.

Cyclic hydrocarbon group-containing monomer (b1) is preferably a compound represented by the formula:

CH₂=CA¹²-C(=O)-O-A¹³ ... (b1-I)

wherein A¹² is a hydrogen atom or a methyl group, A¹³ is a group comprising a cyclic hydrocarbon group having 4 to 30 carbon atoms.

A¹² is particularly preferably a methyl group.

A¹³ is a cyclic hydrocarbon group, and examples thereof are as described above.

Specific examples of cyclic hydrocarbon group-containing monomer (b1) include cyclohexyl (meth)acrylate, t-butylcyclohexyl (meth)acrylate, adamantyl (meth)acrylate, 2-methyl-2-adamantyl (meth)acrylate, 2-ethyl-2-adamantyl (meth)acrylate, bornyl (meth)acrylate, isobornyl (meth)acrylate, norbornyl (meth)acrylate, dicyclopentanyl (meth)acrylate, dicyclopentenyl (meth)acrylate, benzyl (meth)acrylate, styrene, phenyl (meth)acrylate, naphthyl (meth)acrylate, 2-t-butylphenyl (meth)acrylate, etc. The presence of cyclic hydrocarbon group-containing monomer (b1) enhances the water- and oil- repellency that is imparted by the copolymer even if it is a thin coating film.

### (b2) Low Tg monomer, homopolymer of which has glass transition temperature (Tg) of lower than 0°C

Low Tg monomer (b2) is a monomer, the homopolymer of which has a glass transition temperature of lower than 0°C. The glass transition temperature may be lower than -10°C, for example lower than -30°C, preferably lower than -50°C, and particularly lower than -60°C.

Low Tg monomer (b2) is a monomer having a carbon-carbon double bond (ethylenically unsaturated double bond). Low Tg monomer (b2) is preferably (meth)acrylamide or (meth)acrylate, in particular it may be methacrylate.

Low Tg monomer (b2) is preferably a low Tg monomer (b2) having a linear or branched chain (preferably monovalent) hydrocarbon group having 1 to 30 carbon atoms and a monovalent (meth)acrylate group. The linear or branched chain hydrocarbon group having 1 to 30 carbon atoms and the (meth)acrylate group are preferably directly bonded. Preferably the carbon atom in the ring of the cyclic hydrocarbon group is directly bonded to the ester group in the (meth)acrylate group.

Low Tg monomer (b2) is a monomer, the homopolymer of which has the glass transition temperature in the aforementioned range, and is preferably a compound represented by formula:

CH₂=CX²-C(=O)-Y²-Z² ... (b2-I)

wherein X² is a hydrogen atom, a monovalent organic group or a halogen atom,
Y² is -O- or -NH-,
Z² is a hydrocarbon group.
X² is preferably a hydrogen atom, a methyl group, or a halogen atom other than a fluorine atom (for example, a chlorine atom, a bromine atom, and an iodine atom).
Z² is preferably a hydrocarbon group having 1 to 30 carbon atoms, particularly 2 to 15 (for example, a linear or branched chain hydrocarbon group (for example, an aliphatic hydrocarbon group, especially an alkyl group)).

Low Tg monomer (b2) is a monomer, the homopolymer of which has the glass transition temperature in the aforementioned range, and may be a (meth)acrylate ester that has a linear or branched chain hydrocarbon group having 2 to 15 carbon atoms. For example, low Tg monomer (b2) is a monomer, the homopolymer of which has the glass transition temperature in the aforementioned range, and may be a compound that is represented by the formula:

CH₂=CA²¹COOA²² ... (b2-II)

wherein A²¹ is a hydrogen atom, a methyl group, or a halogen atom other than a fluorine atom (for example, a chlorine atom, a bromine atom, and an iodine atom), A²² is a linear or branched chain hydrocarbon group having 2 to 15 carbon atoms. The linear or branched chain hydrocarbon group having 2 to 15 carbon atoms is preferably an alkyl group represented by CₙH₂ₙ₊₁ (n= 2 to 15). For example, low Tg monomer (b2) is a monomer, the homopolymer of which has the glass transition temperature in the aforementioned range, and may be an acrylate wherein A²¹ is a hydrogen atom and A²² is a linear alkyl group having carbon atoms of 2 to 11 (preferably 3 to 10, for example 4 to 9), or a methacrylate wherein A²¹ is a methyl group and A²² is a linear alkyl group having carbon atoms of 7 to 14 (preferably 8 to 13, for example, 9 to 12) in formula (b2-II).

Specific examples of low Tg monomer (b2) include acrylates such as ethyl acrylate, propyl acrylate, butyl acrylate, pentyl acrylate, hexyl acrylate, heptyl acrylate, octyl acrylate, nonyl acrylate, decyl acrylate, undecyl acrylate, lauryl acrylate, 2 -ethylhexyl acrylate, 2-(2-ethoxyethoxy)ethyl acrylate, isoamyl acrylate, tetrahydrofurfuryl acrylate, isodecyl acrylate, isooctyl acrylate, tridecyl acrylate, ethoxy-diethylene glycol acrylate, methoxy triethylene glycol acrylate, phenoxyethyl acrylate, phenoxy polyethylene glycol acrylate (n= about 2), methoxy polyethylene glycol acrylate (n= 4 to 13); methacrylates such as hexyl methacrylate, heptyl methacrylate, octyl methacrylate, nonyl methacrylate, decyl methacrylate, undecyl methacrylate, lauryl methacrylate, tridecyl methacrylate, tetradecyl methacrylate, 2-ethoxyethyl methacrylate, methoxy polyethylene glycol methacrylate (n= 4 to 13).

### (c) Fluorine-free crosslinkable monomer

Fluorine-free crosslinkable monomer (c) is preferably a fluorine-free crosslinkable (meth)acrylate or (meth)acrylamide monomer.

Fluorine-free crosslinkable monomer (c) is preferably (meth)acrylate or (meth)acrylamide, having a reactive group. The reactive group is preferably an active hydrogen-containing group or an active hydrogen-reactive group, for example, a hydroxyl group, an epoxy group, a chloromethyl group, a blocked isocyanate group, an amino group, a carboxyl group, a ketone group, a hydrazide group and a melamine group. Fluorine-free crosslinkable monomer (c) is preferably an active hydrogen-containing monomer (for example, a monomer having a hydroxyl group, an amino group, a carboxyl group, a ketone group, a hydrazide group and/or a melamine group) or an active hydrogen-reactive group-containing monomer (for example, a monomer having an epoxy group, a chloromethyl group, a blocked isocyanate group, a carboxyl group and/or a hydrazide group), and it is more preferably an active hydrogen-containing monomer. A particularly preferable reactive group is the hydroxyl group.

Fluorine-free crosslinkable monomer (c) is preferably a compound represented by formula:

CH₂=CX³-C(=O)-Y³-Z³-W³ ... (c-I)

wherein X³ is a hydrogen atom, a methyl group or a halogen atom other than a fluorine atom (for example, a chlorine atom, a bromine atom, and an iodine atom),
Y³ is a direct bond, -O- or -NH-,
Z³ is a direct bond or a divalent organic group, and
W³ is a hydroxyl group, an epoxy group, a chloromethyl group, a blocked isocyanate group, an amino group, a carboxyl group, a ketone group, a hydrazide group or a melamine group.

Fluorine-free crosslinkable monomer (c) is particularly preferably a compound represented by formula:

CH₂=CX³-C(=O)-Y³-Z³-OH ... (c-II)

wherein X³ is a hydrogen atom, a methyl group or a halogen atom other than a fluorine atom (for example, a chlorine atom, a bromine atom, and an iodine atom),
Y³ is a direct bond or -O- or -NH-,
Z³ is a direct bond or a divalent organic group.
Z³ may be, for example, a linear or branched chain aliphatic group having 1 to 20 carbon atoms (in particularly an alkylene group), for example, a group represented by the formula: -(CH₂)ₓ- wherein x is 1 to 10.

Examples of fluorine-free crosslinkable monomer (c) include N-methylol (meth)acrylamide, N-2-propalol (meth)acrylamide, N-butylol (meth)acrylamide, hydroxyethyl (meth)acrylate, 4-hydroxybutyl (meth)acrylate, polyethylene glycol (meth)acrylate, polypropylene glycol (meth)acrylate, (meth)acrylic acid, diacetone (meth)acrylamide, 3-chloro-2-hydroxypropyl (meth)acrylate, 2-acetoacetoxyethyl (meth)acrylate, glycidyl (meth)acrylate, etc.. Fluorine-free crosslinkable monomer (c) preferably comprises a hydroxyl group-containing monomer (for example, N-methylol (meth)acrylamide) and/or a carboxyl group-containing monomer (for example, (meth)acrylic acid). Incidentally, the carboxyl group may be partially or completely neutralized by a base. The base for neutralization thereof may be an inorganic base such as sodium hydroxide or sodium hydrogencarbonate, or an organic base such as amines (for example, alkylamine) may be used.

Fluorine-free crosslinkable monomer (c) may comprise both of
a compound of formula (c-I) wherein Z³ is a linear or branched chain alkylene group having 1 to 20 carbon atoms and W³ is a hydroxyl group, and
a compound of formula (c-I) having a carboxyl group (for example, a compound wherein Y³ and Z³ are directly bonds and W³ is a hydroxyl group, or a compound wherein W³ is a carboxyl group).

### (d) Other monomers

Monomer (d) other than monomers (a) to (c) preferably comprises no fluorine. Other monomers (c) include a halogenated olefin, (meth)acrylamide, ethylene, vinyl acetate, acrylonitrile, styrene, methoxypolyethylene glycol (meth)acrylate, methoxypolypropylene glycol (meth)acrylate, and vinyl alkyl ether.

The halogenated olefin monomer (halogenated olefin) preferably has no fluorine atom. The halogenated olefin is preferably an olefin having 2 to 20 carbon atoms, substituted with 1 to 10 chlorine atoms, bromine atoms or iodine atoms. The halogenated olefin is preferably a chlorinated olefin having 2 to 20 carbon atoms in particular an olefin having 2 to 5 carbon atoms having 1 to 5 chlorine atoms. Preferred examples of the halogenated olefin are vinyl halides such as vinyl chloride, vinyl bromide, vinyl iodide, vinylidene halides, for example, vinylidene chloride, vinylidene bromide and vinylidene iodide. Vinyl chloride and vinylidene chloride are preferred, vinyl chloride is particularly preferred.

Each of monomers (a), (b1), (b2), (c) and (d) may be used alone or in combination of two or more.

In the coating composition of the present disclosure, the polymer comprising fluorine is preferably the fluorine-containing polymer alone. The fluorine-containing polymer preferably has no polyethylene oxide group in particular no polyalkylene oxide group.

The amount of monomer (a) may be 30% by weight or less, for example, 27% by weight or less, 25% by weight or less, 20% by weight or less, etc., with respect to the polymer. The amount of monomer (a) may be 1% or more, for example, 3% or more, 5% or more, 8% or more, 10% or more, etc., with respect to the polymer. For example, the amount of monomer (a) may be 1 to 30% by weight with respect to the polymer. It may be particularly 3 to 25% by weight, for example, 5 to 20% by weight.

The amount of monomer (b) may be 10 to 75% by weight or more, preferably 20 to 65% by weight, for example, 25 to 55% by weight, with respect to the polymer.

The amount of monomer (c) may be 10 to 75% by weight or more, preferably 20 to 65% by weight, for example 25 to 55% by weight, with respect to the polymer. The amount of the carboxyl group-containing monomer (for example, acrylic acid) may be 0 to 10% by weight, for example 0.5 to 8% by weight, with respect to the polymer. The amount of monomer (d) may be 25% by weight or more, preferably 10% by weight or less, for example, 0 to 5% by weight, with respect to the polymer.

The weight ratio of monomer (a) and monomer (b) may be 100: 50 to 100: 1000, preferably 100: 100 to 100: 500, for example, 100: 200 to 100: 500.

The weight ratio of monomer (b) and monomer (c) may be 100: 20 to 100: 500, preferably 100: 40 to 100: 300, for example, 100: 60 to 100: 200.

The weight ratio of monomer (b1) and monomer (b2) may be 100: 5 to 100: 100, preferably 100: 10 to 100: 75, for example, 100: 15 to 100: 50.

The amount (solid content) of the fluorine-containing polymer may be about 0.01 to 60% by weight, preferably about 0.1 to 40% by weight, and particularly preferably about 5 to 35% by weight, relative to the coating composition. The fluorine-containing polymer may be present in the form of a solution dissolved in an organic solvent or in the form of a water-based dispersion.

The weight-average molecular weight of the fluorine-containing polymer may be 5,000 to 500,000. The weight-average molecular weight is a value obtained in terms of polystyrene conversion by gel permeation chromatography. The fluorine-containing polymer may be a random copolymer or a block copolymer, but is preferably a random copolymer.

The glass transition temperature (Tg) of the fluorine-containing polymer is not limited, but may be - 30 to 80°C, for example, -20 to 50°C. The glass transition temperature is measured by the differential scanning calorimetry (DSC) method.

The fluorine-containing polymer is not limited, but may have a hydroxy value of 2 to 200 mgKOH/g, for example, 4 to 100 mgKOH/g.

As used herein, "(meth)acrylate" refers to acrylate or methacrylate, and "(meth)acrylamide" generally refers to acrylamide or methacrylamide. "(Meta)acrylate" and "(meth)acrylamide" each may comprise a compound in which the α-position is substituted with other groups other than the hydrogen atom and the methyl group (for example, a monovalent organic group (a hydrocarbon group having 2 to 10 carbon atom is exemplified.) or a halogen atom (a chlorine atom and a bromine atom are exemplified)).

The coating composition comprises
(1) the fluorine-containing polymer and
(2) a liquid medium.

The coating composition may further comprise at least one of
(3) a surfactant and
(4) a curing agent.

The coating composition may further comprise (5) other components.

### (2) Liquid medium

The coating composition comprises the fluorine-containing polymer and the liquid medium. The liquid medium may be a non-aqueous medium and/or an aqueous medium. As used herein, the "aqueous medium" refers to a medium composed only of water and a medium comprising an organic solvent in addition to water (the amount of the organic solvent is 80 parts by weight or less, for example, 0.1 to 50 parts by weight in particular 5 to 30 parts by weight, with respect to 100 parts by weight of water).

The amount of the liquid medium may be 20 to 99% by weight, for example, 40 to 95% by weight, with respect to the coating composition.

The aqueous medium may be added after the fluorine-containing polymer is produced by polymerization. For example, after polymerizing the monomer in the presence of an organic solvent to produce a fluorine-containing polymer, then water is added, and the organic solvent is distilled off. The organic solvent may not be distilled off. The surfactant may or may not be added before or after the polymerization. Even when no surfactant is added, an aqueous dispersion in which the fluorine-containing polymer is well dispersed in the aqueous medium can be obtained.

### (3) Surfactant

The coating composition may comprise a surfactant when the composition is an aqueous dispersion. The surfactant includes at least one of a nonionic surfactant, a cationic surfactant and an anionic surfactant. Furthermore, the surfactant may include an amphoteric surfactant. Moreover, the composition may not comprise the surfactant.

The coating composition generally comprises a surfactant when it is an aqueous dispersion. When the coating composition is an aqueous solution, it generally comprises no surfactant.

The nonionic surfactant is a nonionic surfactant having an oxyalkylene group. The alkylene group in the oxyalkylene group preferably has 2 to 10 carbon atoms. The number of oxyalkylene groups in the molecule of the nonionic surfactant is generally preferably 2 to 100.

The nonionic surfactant may be an alkylene oxide adduct of linear and/or branched chain aliphatic (saturated and/or unsaturated) groups, a polyalkylene glycol ester of linear and/or branched chain (saturated and/or unsaturated) fatty acid, a polyoxyethylene (POE)/polyoxypropylene (POP) copolymer (random copolymer or block copolymer), or an alkylene oxide adduct of acetylene glycol, etc. Among them, a compound having the structures of the alkylene oxide addition moiety and the polyalkylene glycol moiety that are polyoxyethylene (POE) or polyoxypropylene (POP) or a POE/POP copolymer (may be a random copolymer or a block copolymer), is preferred.

Moreover, the nonionic surfactant preferably has the structure comprising no aromatic group due to environmental problems (biodegradability, environmental hormones, etc.).

The cationic surfactant is preferably a compound having no amide group.

The cationic surfactant may be an amine salt, a quaternary ammonium salt, or an oxyethylene-added ammonium salt. Specific examples of the cationic surfactant are not limited, but include amine salt-based surfactants such as alkylamine salts, aminoalcohol fatty acid derivatives, polyamine fatty acid derivatives, and imidazoline, quaternary ammonium salt-based surfactants, such as alkyltrimethylammonium salts, dialkyldimethylammonium salts, alkyldimethylbenzylammonium salts, pyridinium salts, alkylisoquinolinium salts, and benzethonium chloride.

Specific examples of the cationic surfactant include dodecyltrimethylammonium acetate, trimethyltetradecylammonium chloride, hexadecyltrimethylammonium bromide, trimethyloctadecylammonium chloride, (dodecylmethylbenzyl)trimethylammonium chloride, benzyl dodecyl dimethylammonium chloride, methyl dodecyl di(hydropolyoxyethylene)ammonium chloride, benzyl dodecyl di(hydropolyoxyethylene)ammonium chloride, and N-[2-(diethylamino)ethyl]oleamide hydrochloride.

Examples of the anionic surfactant include fatty acid salts (the number of carbon atoms of the fatty acid is for example, 8 to 30), sulfonates (for example, an alkyl sulfonic acid, an alkylbenzene sulfonate (the number of carbon atoms of the alkyl group is, for example, 8 to 30.)), sulfate ester salts (for example, an alkyl sulfate ester salt (the number of carbon atoms of the alkyl group is, for example, 8 to 30.)).

Examples of the anionic surfactant include sodium lauryl sulfate, triethanolamine lauryl sulfate, sodium polyoxyethylene lauryl ether sulfate, sodium polyoxyethylene nonylphenyl ether sulfate, triethanolamine polyoxyethylene lauryl ether sulfate, sodium cocoyl sarcosinate, sodium N-cocoyl methyl taurine, sodium polyoxyethylene palm alkyl ether sulfate, sodium dietherhexyl sulfosuccinate, sodium α-olefin sulfonate, sodium lauryl phosphate, sodium polyoxyethylene lauryl ether phosphate, etc.

Examples of the amphoteric surfactant include alanines, imidazolinium betaines, amide betaines, betaine acetate, etc., and specific examples thereof include lauryl betaine, stearyl betaine, lauryl carboxymethyl hydroxyethyl imidazolinium betaine, lauryl dimethylaminoacetate betaine, fatty acid amide propyldimethylaminoacetate betaine, etc.

Each of the nonionic surfactant, the cationic surfactant, the anionic surfactant, and the amphoteric surfactant may be used alone or in combination of two or more.

The surfactant is preferably the anionic surfactant and/or the nonionic surfactant. A combination of the anionic surfactant and the nonionic surfactant is preferred.
The surfactant may be used in the range of 0 to 25 parts by weight, for example, 0.5 to 20 parts by weight with respect to 100 parts by weight of the monomer.

In the present disclosure, a dispersion of the fluorine-containing polymer in particular an aqueous dispersion, can be formed even when the surfactant is not used.

### [Method for producing fluorine-containing polymer]

The fluorine-containing polymer in the present disclosure can be produced by any of the usual polymerization methods, and the conditions of the polymerization reaction can be arbitrarily selected. Such a polymerization method includes solution polymerization, suspension polymerization, and emulsion polymerization.

In solution polymerization, a method is adopted, wherein dissolving the monomer in an organic solvent in the presence of a polymerization initiator, substituting with nitrogen, and then heating and stirring them in the range of 30 to 120°C for 1 to 10 hours. The polymerization initiator includes, for example, azobisisobutyronitrile, benzoyl peroxide, di-t-butyl peroxide, lauryl peroxide, cumene hydroperoxide, t-butyl peroxypivalate, diisopropyl peroxydicarbonate, etc. The polymerization initiator is used in the range of 0.01 to 20 parts by weight, for example, 0.01 to 10 parts by weight with respect to 100 parts by weight of the monomer.

The organic solvent is inert to the monomer and dissolves it, and the solvent may be for example, an ester (for example, an ester having 2 to 30 carbon atoms, specifically, ethyl acetate and butyl acetate), a ketone (for example, a ketone having 2 to 30 carbon atoms, specifically, methyl ethyl ketone and diisobutyl ketone), or an alcohol (for example, an alcohol having 1 to 30 carbon atoms, specifically, isopropyl alcohol). Specific examples of the organic solvent include acetone, chloroform, HCHC225, isopropyl alcohol, pentane, hexane, heptane, octane, cyclohexane, benzene, toluene, xylene, petroleum ether, tetrahydrofuran, 1,4-dioxane, methyl ethyl ketone, methyl isobutyl ketone, diisobutyl ketone, ethyl acetate, butyl acetate, 1,1,2,2-tetrachloroethane, 1,1,1-trichloroethane, trichlorethylene, perchloroethylene, tetrachlorodifluoroethane, and trichlorotrifluoroethane, etc. The organic solvent is used in the range of 10 to 2,000 parts by weight, for example, 50 to 1,000 parts by weight, relative to 100 parts by weight of the monomer in total.

In emulsion polymerization, a method is adopted, wherein emulsifying the monomer in water in the presence of a polymerization initiator and an emulsifier, substituting with nitrogen, and then stirring and polymerizing the monomer in the range of 50 to 80°C for 1 to 10 hours. The polymerization initiator used is water-soluble substances, such as benzoyl peroxide, lauroyl peroxide, t-butyl perbenzoate, 1-hydroxycyclohexylhydro peroxide, 3-carboxypropionyl peroxide, acetyl peroxide, azobisisobutyamidine-dihydrochloride, azobisisobutyronitrile, sodium peroxide, potassium persulfate, ammonium persulfate, and oil-soluble substances, such as azobisisobutyronitrile, benzoyl peroxide, di-t-butyl peroxide, lauryl peroxide, cumene hydroperoxide, t-butylperoxypivalate, diisopropylperoxydicarbonate. The polymerization initiator is used in the range of 0.01 to 10 parts by weight with respect to 100 parts by weight of the monomer.

In order to obtain a polymer aqueous dispersion having excellent standing stability, the monomer is preferably atomized and polymerized in water by using an emulsifying apparatus such as a high-pressure homogenizer or an ultrasonic homogenizer that can impart strong crushing energy. Moreover, as the emulsifier, various anionic, cationic or nonionic emulsifiers can be used, and they are used in the range of 0.5 to 20 parts by weight with respect to 100 parts by weight of the monomer. The anionic and/or nonionic and/or cationic emulsifiers are preferably used. When the monomers are not completely compatible, a compatibilizer that is sufficiently compatible with these monomers, for example, a water-soluble organic solvent or a low molecular weight monomer is preferably added. It is possible to improve the emulsifiability and copolymerizability by adding the compatibilizer.

The water-soluble organic solvent includes acetone, methyl ethyl ketone, ethyl acetate, propylene glycol, dipropylene glycol monomethyl ether, dipropylene glycol, tripropylene glycol, ethanol, etc., and they may be used in the range of 1 to 50 parts by weight, for example, in the range of 10 to 40 parts by weight, with respect to 100 parts by weight of water. Moreover, the low molecular weight monomer includes methyl methacrylate, glycidyl methacrylate, 2,2,2-trifluoroethyl methacrylate, etc., and they may be used in the range of 1 to 50 parts by weight, for example, in the range of 10 to 40 parts by weight, with respect to 100 parts by weight of the total amount of the monomer.

A chain transfer agent may be used in the polymerization. The molecular weight of the polymer can be changed depending on the amount of the chain transfer agent used. Examples of the chain transfer agent include mercaptan group-containing compounds such as lauryl mercaptan, thioglycol, thioglycerol (in particular an alkyl mercaptan (for example, having 1 to 30 carbon atoms)), and inorganic salts such as sodium hypophosphite, sodium hydrogen sulfite. The amount of the chain transfer agent used may be in the range of 0.01 to 10 parts by weight, for example, 0.1 to 5 parts by weight, relative to 100 parts by weight of the total amount of monomers.

The coating composition of the present disclosure may be in the form of a solution, an emulsion (in particular an aqueous dispersion) or an aerosol, but is preferably an aqueous dispersion. The coating composition comprises the polymer (the active ingredients of surface-treating agent) and the medium (in particular a liquid medium, such as an organic solvent and/or water). The amount of the medium may be, for example, 5 to 99.9% by weight in particular 10 to 80% by weight, relative to the coating composition.

In the coating composition, the concentration of the polymer may be 0.01 to 95% by weight, for example, 5 to 50% by weight.

The fluorine-containing polymer is preferably produced by an emulsion polymerization method or a solution polymerization method.

After producing the fluorine-containing polymer by polymerization, water (or an aqueous medium) is preferably added to disperse the fluorine-containing polymer in water.

Water (or the aqueous medium) may be added after producing the fluorine-containing polymer by polymerization. For example, after polymerizing the monomer in the presence of an organic solvent to produce the fluorine-containing polymer, water may be added to the polymer mixture and the organic solvent may be distilled off, and then the fluorine-containing polymer may be dispersed in water. The organic solvent may not be distilled off. The surfactant may or may not be added before or after the polymerization. A favorable aqueous dispersion can be obtained even when no surfactant is added.

The coating composition may comprise (4) a curing agent (active hydrogen-reactive compound or active hydrogen-containing compound). Generally, after producing the fluorine-containing polymer, curing agent (4) is added.

### (4) Curing agent

The coating composition preferably comprises the curing agent (cross-linking agent) so that the fluorine-containing polymer can be cured satisfactorily. Since fluorine-free crosslinkable monomer (c) is an active hydrogen-containing monomer or an active hydrogen-reactive group-containing monomer, the fluorine-containing polymer has an active hydrogen or an active hydrogen-reactive group. The curing agent is an active hydrogen-reactive compound or an active hydrogen-containing compound so as to react with the active hydrogen or the active hydrogen-reactive group of the fluorine-containing polymer.

Examples of the active hydrogen-reactive compound include a polyisocyanate compound, an epoxy compound, a chloromethyl group-containing compound, a carboxyl group-containing compound, and a hydrazide compound.

Examples of the active hydrogen-containing compound include a hydroxyl group-containing compound, an amino group-containing compound and a carboxyl group-containing compound, a ketone group-containing compound, a hydrazide compound and a melamine compound.

The curing agent is preferably a polyisocyanate compound.
The polyisocyanate compound is a compound having two or more isocyanate groups in the molecule. The polyisocyanate compound acts as a cross-linking agent. Examples of the polyisocyanate compound include an aliphatic polyisocyanate, an alicyclic polyisocyanate, an aromatic-aliphatic polyisocyanate, an aromatic polyisocyanate, and derivatives of these polyisocyanates.

Examples of the aliphatic polyisocyanate include aliphatic diisocyanates, such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, 2,6-diisocyanatomethylcaproate, and aliphatic triisocyanates, such as lysine ester triisocyanate, 1,4,8-triisocyanato octane, 1,6,11-triisocyanato undecane, 1,8-diisocyanato-4-isocyanatomethyloctane, 1,3,6-triisocyanato hexane, 2,5,7-trimethyl-1,8-diisocyanato-5-isocyanatomethyloctane.

Examples of the alicyclic polyisocyanate include alicyclic diisocyanates, alicyclic triisocyanates, etc. Specific examples of the alicyclic polyisocyanate are 1,3-cyclopentene diisocyanate, 3-isocyanatomethyl-3,5,5-trimethylcyclohexylisocyanate (isophorone diisocyanate), and 1,3,5-triisocyanatocyclohexane.

Examples of the aromatic-aliphatic polyisocyanate include aromatic-aliphatic diisocyanates and aromatic-aliphatic triisocyanates. Specific examples of the aromatic-aliphatic polyisocyanate include 1,3- or 1,4-xylylene diisocyanate or a mixture thereof, 1,3- or 1,4-bis(1-isocyanato-1-methylethyl)benzene (tetramethylxylylene diisocyanate) or a mixture thereof, and 1,3,5-triisocyanatomethylbenzene.

Examples of the aromatic polyisocyanate are aromatic diisocyanates, aromatic triisocyanates, and aromatic tetraisocyanates. Specific examples of the aromatic polyisocyanate include m-phenylenediisocyanate, p-phenylenediisocyanate, 4,4'-diphenyldiisocyanate, 1,5-naphthalenediisocyanate, 2,4'-or 4,4'-diphenylmethane diisocyanate or a mixture thereof, 2,4- or 2,6-tolylene diisocyanate or a mixture thereof, triphenylmethane-4,4',4''-triisocyanate, 4,4'-diphenylmethane-2,2',5,5'-tetraisocyanate, etc.

The polyisocyanate derivatives include, for example, various derivatives such as a dimer, a trimmer, a biuret, an allophanate, a carbodiimide, a uretdione, a uretoimine, an isocyanurate, and an iminooxadiazinedione of the aforementioned polyisocyanate compounds.

These polyisocyanates each can be used alone or in combination of two or more.

The blocked polyisocyanate compound that is a blocked compound in which the isocyanate group of the polyisocyanate compound is blocked with a blocking agent, may also be used.

The isocyanate compound may be blocked by a blocking agent. The blocking agent blocks free isocyanate groups. The blocked polyisocyanate compound that is heated to, for example, 100°C or higher, preferably 130°C or higher, can reproduce an isocyanate group and easily react with a hydroxyl group. Examples of the blocking agent are a phenol-based compound, a lactam-based compound, an aliphatic alcohol-based compound, an oxime-based compound, etc.

The polyisocyanate compound can be used alone or in combination of two or more.

The epoxy compound that is an active hydrogen reactive compound, is a compound having an epoxy group. Examples of the epoxy compound are epoxy compounds having polyoxyalkylene groups, such as polyglycerol polyglycidyl ether and polypropylene glycol diglycidyl ether; and sorbitol polyglycidyl ether.

The chloromethyl group-containing compound that is an active hydrogen-reactive compound, is a compound having a chloromethyl group. Examples of the chloromethyl group-containing compound are chloromethylpolystyrene, etc.

The carboxyl group-containing compound that is an active hydrogen-reactive compound, is a compound having a carboxyl group. Examples of the carboxyl group-containing compound are (poly)acrylic acid, (poly)methacrylic acid, etc.

The hydrazide compound that is an active hydrogen-reactive compound, is a compound having a hydrazide group, and examples of the hydrazide compound are hydrazine, carbohydrazide, adipate hydrazide, etc.

The ketone group-containing compound that is an active hydrogen-containing compound, is a compound having a ketone group. Examples of the ketone group-containing compound are (poly)diacetone acrylamide, diacetone alcohol, etc.

Examples of the melamine compound that is an active hydrogen-containing compound, are compounds having melamine-derived structures, such as a melamine resin and a methyl etherified melamine resin.

The equivalent ratio of an active hydrogen or active hydrogen-reactive group in the curing agent (in particular the isocyanate group in the polyisocyanate compound) to an active hydrogen or active hydrogen-reactive group (in particular hydroxyl group) in the fluorine-containing polymer, equivalent ratio (NCO/OH), may be 0.5 to 2.5, for example, 0.5 to 2.3, preferably 0.8 to 2.0, and more preferably 1.1 to 1.8.

### (5) Other component

The coating composition may comprise other component (5) other than the aforementioned components (1) to (4). Generally, after producing the fluorine-containing polymer, other component (5) is added. An example of the other component is a fluorine-free water-repellency compound.

### Fluorine-free water-repellency compound

The coating composition may comprise a water-repellency compound (fluorine-free water- repellency compound) that comprises no fluorine atom.

The fluorine-free water-repellency compound may be a fluorine-free acrylate polymer, a saturated or unsaturated hydrocarbon compound, or a silicone-based compound.

The fluorine-free acrylate polymer is a homopolymer composed of one type of fluorine-free (meth)acrylate monomer, or a copolymer composed of at least two types of fluorine-free (meth)acrylate monomers, or a copolymer composed of at least one fluorine-free (meth)acrylate monomer and at least one of other fluorine-free monomers (ethylene unsaturated compounds, for example, ethylene or vinyl-based monomers). The fluorine-free (meth)acrylate monomer constituting the fluorine-free acrylate polymer is a compound represented by the formula:

CH₂=CA-T

wherein A is a hydrogen atom, a methyl group, or a halogen atom other than a fluorine atom (for example, a chlorine atom, a bromine atom, and an iodine atom),

T is a hydrogen atom, a chain or cyclic hydrocarbon group having 1 to 30 carbon atoms, or a chain or cyclic organic group having 1 to 31 carbon atoms with an ester bond.

Examples of the chain or cyclic hydrocarbon group having 1 to 30 carbon atoms include a linear or branched aliphatic hydrocarbon group having 1 to 30 carbon atoms, a cycloaliphatic group having 4 to 30 carbon atoms, an aromatic hydrocarbon group having 6 to 30 carbon atoms, and an aromatic-aliphatic hydrocarbon group having 7 to 30 carbon atoms.

Examples of the chain or cyclic organic group having 1 to 31 carbon atoms with an ester bond are -C(=O)-O-Q and -O-C(=O)-Q, wherein Q is a linear or branched aliphatic hydrocarbon group having 1 to 30 carbon atoms, a cycloaliphatic group having 4 to 30 carbon atoms, an aromatic hydrocarbon group having 6 to 30 carbon atoms, and an aromatic-aliphatic hydrocarbon group having 7 to 30 carbon atoms.

Examples of the fluorine-free (meth)acrylate monomer include, for example, alkyl (meth)acrylate, polyethylene glycol (meth)acrylate, polypropylene glycol (meth)acrylate, methoxypolyethylene glycol (meth)acrylate, and methoxypolypropylene glycol (meth)acrylate.

The fluorine-free (meth)acrylate monomer is preferably an alkyl (meth)acrylate ester. The number of carbon atoms of the alkyl group may be 1 to 30, for example, 6 to 30 (for example, 10 to 30). Specific examples of the fluorine-free (meth)acrylate monomer are lauryl (meth)acrylate, stearyl (meth)acrylate and behenyl (meth)acrylate.

The fluorine-free acrylate polymer can be produced by the same polymerization method as the fluorine-containing polymer.

The saturated or unsaturated hydrocarbon-based compound is preferably a saturated hydrocarbon. The saturated or unsaturated hydrocarbon-based compound may have the number of carbon atoms of 15 or more, preferably of 20 to 300, for example of 25 to 100. Specific examples of the saturated or unsaturated hydrocarbon-based compound are paraffin, etc.

The silicone-based compound is generally used as a water repellent. The silicone-based compound is not limited provided that it is a compound exhibiting water-repellency.

The amount of the fluorine-free water-repellency compound may be 500 parts by weight or less, for example, 5 to 200 parts by weight in particular 5 to 100 parts by weight, with respect to 100 parts by weight of the fluorine-containing polymer.

The coating composition of the present disclosure may compound publicly known pigments such as coloring pigments, extender pigments, brilliant pigments, and antirust pigments, if necessary.

Further, the coating composition of the present disclosure can compound general coating material additives such as a curing catalyst, an ultraviolet absorber, a light stabilizer, an antioxidant, a surface conditioner, and an antifoaming agent, if necessary. In the present disclosure, no hydrazino group-containing compound is preferably used.

The coating composition preferably comprises no silicon atom. The coating composition preferably comprises no fluoro olefin.

The coating composition of the present disclosure can be applied to an object to be treated (i.e., an article) by conventionally known methods. Usually, a method is adopted, wherein dispersing and diluting the coating composition in an organic solvent or water, then adhering the diluted composition to the surface of the object to be treated by the publicly known methods such as dip coating, spray coating, foam coating, etc., and drying it. Moreover, the coating composition may be applied together with a suitable cross-linking agent and be cured if necessary. Further, auxiliary agents, such as an insect repellent, a softening agent, an antibacterial agent, a flame retarder, an antistatic agent, a coating material fixing agent, a wrinkle-resistant agent, a film-forming auxiliary agent, etc., can be added in combination therewith to the coating composition of the present disclosure. The concentration of the polymer in the treatment liquid to be brought into contact with a substrate may be 0.01 to 10% by weight (in particular in the case of dip coating), for example, 0.05 to 10% by weight.

The object to be treated (substrate) that is treated with the coating composition (coating material) of the present disclosure includes building timber, wall materials, concrete, plastic products, stone, glass, paper, wood, leather, fur, asbestos, brick, cement, metals and oxides, ceramic products, plasters, etc., with the building timber, wall materials and plastic products being preferred.

The substrate also includes vehicle bodies of automobiles, motorcycles, etc., or parts thereof. It may be steel sheets such as cold-rolled steel sheets that form vehicle bodies, galvanized steel sheets, zinc alloy plated steel sheets, stainless steel sheets, and tin plated steel sheets; metal substrates such as aluminum plates and aluminum alloy plates; and other various plastic substrates, etc.

The plastic substrate includes substrates that are a polycarbonate resin, styrene resins (for example, an ABS resin, an AS resin, an ASA resin, a polystyrene resin, etc.), an olefin resin, an acrylic resin, a polyamide resin, a polyimide resin, a polyester resin, a polyether resin, or mixtures thereof (for example, alloy resins), and among them, the substrates that are the polycarbonate resin, polyester resin, ABS resin or acrylic resin are preferred.

The coating composition can be applied by any of the methods known for treating coating materials with liquids. The coating composition may be adhered or sprayed. The treated substrate is dried and preferably heated at, for example, 60 to 120°C in particular 80°C.

A film comprising the fluorine-containing polymer is formed on the substrate by the coating composition. The film is continuous and generally has no pores. The thickness of the coating film may be 0.01 to 5 mm, for example, 0.1 to 3 mm. Normally, when the thickness of the coating film is thin (for example, 30 µm or less), properties such as the antifouling property are deteriorated, but using the coating film of the present invention exhibits the satisfactory antifouling property even in the case of the film thickness being 3 to 30 µm (for example, 15 to 30 µm).

The coated article has the substrate and the film comprising the fluorine-containing polymer.

### [Examples]

Next, the present invention will be specifically described below by way to Examples and Comparative Examples, but the present invention is not limited to the description thereof.
Parts or % denote parts by weight or % by weight unless otherwise specified below.

The properties were measured according to the following procedures.

### Antifouling test

The ABS substrate coated with the sample was coated with oleic acid, lactic acid, and sunscreen cream, and the coated substrate was left standing at 60°C for 24 hours. Then they were wiped off with a dry fabric, and the degree of remaining fouling after wiping was evaluated.

The degree of remaining fouling is evaluated and ranked as follows.

**[Table A]**

| | Deqree of remaining fouling |
|---|---|
| 5 | No traces on coating film and substrate |
| 4 | Slight traces on coating film |
| 3 | Traces on coating film or substrate |
| 2 | Traces on coating film or substrate as well as small crackings thereon |
| 1 | Traces on coating film or substrate as well as larger crackings thereon |

### Production Example 1

In a 500 ml reaction flask, 22.5 g of CF₃CF₂-(CF₂CF₂)n-CH₂CH₂OCOCH=CH₂ (n= 2.0) (C6SFA), 10 g of lauryl methacrylate, 57.5 g of isobornyl methacrylate, 57.5 g of hydroxybutyl acrylate, 7.5 g of methacrylic acid were dissolved in 120 g of 2-propanol, the inside of the reaction flask was substituted with nitrogen, and then a solution in which 2 g of azobisisobutyronitrile was dissolved in 10 g of 2-propanol was added to the above mixture, and the obtained mixture was heated to 80°C and reacted for 20 hours. Subsequently, it was neutralized with 8.8 g of triethylamine, 400 g of pure water was added, and 2-propanol was distilled off at 60°C under stirring to obtain an aqueous dispersion. The solid content was adjusted to 30%, and the composition of the polymer was almost the same as the composition of the charged monomers.

### Production Example 2

In a 500 ml reaction flask, 22.5 g of CF₃CF₂-(CF₂CF₂)n-CH₂CH₂OCOCH=CH₂ (n= 2.0) (C6SFA), 10 g of butyl acrylate, 57.5 g of isobornyl methacrylate, 57.5 g of hydroxybutyl acrylate, 7.5 g of methacrylic acid were dissolved in 120 g of 2-propanol, the inside of the reaction flask was substituted with nitrogen, and then a solution in which 2 g of azobisisobutyronitrile was dissolved in 10 g of 2-propanol was added to the above mixture, and the obtained mixture was heated to 80°C and reacted for 20 hours. Subsequently, it was neutralized with 8.8 g of triethylamine, 400 g of pure water was added, and 2-propanol was distilled off at 60°C under stirring to obtain an aqueous dispersion. The solid content was adjusted to 30%, and the composition of the polymer was almost the same as the composition of the charged monomers.

### Comparative Production Example 1

In a 500 ml reaction flask, 22.5 g of CF₃CF₂-(CF₂CF₂)n-CH₂CH₂OCOCH=CH₂ (n= 2.0) (C6SFA), 27 g of butyl acrylate, 40.5 g of methyl methacrylate, 52.5 g of hydroxybutyl acrylate, 7.5 g of methacrylic acid were dissolved in 120 g of 2-propanol, the inside of the reaction flask was substituted with nitrogen, and then a solution in which 2 g of azobisisobutyronitrile was dissolved in 10 g of 2-propanol was added to the above mixture, and the obtained mixture was heated to 80°C and reacted for 20 hours. Subsequently, it was neutralized with 8.8 g of triethylamine, 400 g of pure water was added, and 2-propanol was distilled off at 60°C under stirring to obtain an aqueous dispersion. The solid content was adjusted to 30%, and the composition of the polymer was almost the same as the composition of the charged monomers.

### Comparative Production Example 2

In a 500 ml reaction flask, 22.5 g of CF₃CF₂-(CF₂CF₂) n-CH₂CH₂OCOCH=CH₂ (n= 2.0) (C6SFA), 67.5 g of methyl methacrylate, 52.5 g of hydroxybutyl acrylate, 7.5 g of methacrylic acid were dissolved in 120 g of 2-propanol, the inside of the reaction flask was substituted with nitrogen, and then a solution in which 2 g of azobisisobutyronitrile was dissolved in 10 g of 2-propanol was added to the above mixture, and the obtained mixture was heated to 80°C and reacted for 20 hours. Subsequently, it was neutralized with 8.8 g of triethylamine, 400 g of pure water was added, and 2-propanol was distilled off at 60°C under stirring to obtain an aqueous dispersion. The solid content was adjusted to 30%, and the composition of the polymer was almost the same as the composition of the charged monomers.

### Comparative Production Example 3

In a 500 ml reaction flask, 22.5 g of butyl acrylate, 67.5 g of methyl methacrylate, 52.5 g of hydroxybutyl acrylate, 7.5 g of methacrylic acid were dissolved in 120 g of 2-propanol, the inside of the reaction flask was substituted with nitrogen, and then a solution in which 2 g of azobisisobutyronitrile was dissolved in 10 g of 2-propanol was added to the above mixture, and the obtained mixture was heated to 80°C and reacted for 20 hours. Subsequently, it was neutralized with 8.8 g of triethylamine, 400 g of pure water was added, and 2-propanol was distilled off at 60°C under stirring to obtain an aqueous dispersion. The solid content was adjusted to 30%, and the composition of the polymer was almost the same as the composition of the charged monomers.

### Example 1

An ABS plate (6 cm × 15 cm) was prepared, and a water-based cross-linking agent based on isocyanate (example; Bayhydur(R) XP 2655) was added to 95 g of the aqueous dispersion of the polymer obtained in Production Example 1, the pH of which was adjusted to 7 to 9 so that the mol ratio of NCO/OH = 1.5/1, and after stirring, the ABS plate was coated with a smooth transparent film to a thickness of 20 µm by using a coating rod. The coated ABS plate was cured at 80°C for 120 minutes, and then air-dried at room temperature for 7 days for the evaluation test. The results are shown in Table 1.

### Example 2

An ABS plate (6 cm × 15 cm) was prepared, and a water-based cross-linking agent based on isocyanate (example; Bayhydur(R) XP 2655) was added to 95 g of the aqueous dispersion of the polymer obtained in Production Example 2, the pH of which was adjusted to 7 to 9 so that the mol ratio of NCO/OH = 1.5/1, and after stirring, the ABS plate was coated with a smooth transparent film to a thickness of 20 µm by using a coating rod. The coated ABS plate was cured at 80°C for 120 minutes, and then air-dried at room temperature for 7 days for the evaluation test. The results are shown in Table 1.

### Comparative Example 1

An ABS plate (6 cm × 15 cm) was prepared, and a water-based cross-linking agent based on isocyanate (example; Bayhydur(R) XP 2655) was added to 95 g of the aqueous dispersion of the polymer obtained in Comparative Production Example 1, the pH of which was adjusted to 7 to 9 so that the mol ratio of NCO/OH = 1.5/1, and after stirring, the ABS plate was coated with a smooth transparent film to a thickness of 20 µm by using a coating rod. The coated ABS plate was cured at 80°C for 120 minutes, and then air-dried at room temperature for 7 days for evaluation test. The results are shown in Table 1.

### Comparative Example 2

An ABS plate (6 cm × 15 cm) was prepared, and a water-based cross-linking agent based on isocyanate (example; Bayhydur(R) XP 2655) was added to 95 g of the aqueous dispersion of the polymer obtained in Comparative Production Example 2, the pH of which was adjusted to 7 to 9 so that the mol ratio of NCO/OH = 1.5/1, and after stirring, the ABS plate was coated with a smooth transparent film to a thickness of 20 µm by using a coating rod. The coated ABS plate was cured at 80°C for 120 minutes, and then air-dried at room temperature for 7 days for evaluation test. The results are shown in Table 1.

### Comparative Example 3

An ABS plate (6 cm × 15 cm) was prepared, and a water-based cross-linking agent based on isocyanate (example; Bayhydur(R) XP 2655) was added to 95 g of the aqueous dispersion of the polymer obtained in Comparative Production Example 3, the pH of which was adjusted to 7 to 9 so that the mol ratio of NCO/OH = 1.5/1, and after stirring, the ABS plate was coated with a smooth transparent film to a thickness of 20 µm by using a coating rod. The coated ABS plate was cured at 80°C for 120 minutes, and then air-dried at room temperature for 7 days for evaluation test. The results are shown in Table 2.

### Comparative Example 4

An ABS plate (6 cm × 15 cm) was prepared, and a water-based cross-linking agent based on isocyanate (example; Bayhydur(R) XP 2655) was added to 95 g of the aqueous dispersion of the polymer obtained in Comparative Production Example 3, the pH of which was adjusted to 7 to 9 so that the mol ratio of NCO/OH = 1.5/1, and after stirring, the ABS plate was coated with a smooth transparent film to a thickness of 35 µm by using a coating rod. The coated ABS plate was cured at 80°C for 120 minutes, and then air-dried at room temperature for 7 days for evaluation test. The results are shown in Table 2.

[Table B]

**Table 1**

| | Example 1 | Example 2 | Comparative Example 1 | Comparative Example 2 |
|---|---|---|---|---|
| Lactic acid | 4 | 4 | 1 | 2 |
| Oleic acid | 5 | 5 | 4 | 4 |
| Sunscreen cream | 5 | 5 | 4 | 4 |

[Table C]

**Table 2**

| | Comparative Example 3 | Comparative Example 4 |
|---|---|---|
| Lactic acid | 1 | 3 |
| Oleic acid | 1 | 2 |
| Sunscreen cream | 4 | 4 |

### Industrial Applicability

The coating composition comprising the polymer of the present disclosure can be used, for example, as a coating material for coating building timber, wall materials, plastic products, etc.

## Claims

1. A fluorine-containing polymer having repeating units derived from
(a) a fluorine-containing monomer,
(b) a fluorine-free non-crosslinkable monomer, and
(c) a fluorine-free crosslinkable monomer,
wherein the fluorine-containing monomer (a) is a compound represented by formula:
CH₂=C (-X) -C (=O) -Y-Z-Rf ... (a-I)
wherein X is a hydrogen atom, a monovalent organic group or a halogen atom,
Y is -O- or -NH-,
Z is a direct bond or a divalent organic group,
Rf is a fluoroalkyl group having 1 to 20 carbon atoms, and
wherein the fluorine-free non-crosslinkable monomer (b) comprises
(b1) a cyclic hydrocarbon group-containing monomer and
(b2) a low Tg monomer, a homopolymer of which has a glass transition temperature (Tg) of lower than 0°C.

2. The fluorine-containing polymer according to claim 1, wherein in the fluorine-containing monomer (a) represented by formula (a-I), X is a hydrogen atom and the number of carbon atoms of Rf is 1 to 6.

3. The fluorine-containing polymer according to claim 1 or 2, wherein in the cyclic hydrocarbon group-containing monomer (b1), the cyclic hydrocarbon group has 4 to 30 carbon atoms.

4. The fluorine-containing polymer according to claim 1 or 2, wherein in the monomer (b1), the cyclic hydrocarbon group is at least one selected from the group consisting of a cyclohexyl group, a t-butylcyclohexyl group, an adamantyl group, a 2-methyl-2-adamantyl group, a 2-ethyl-2-adamantyl group, a bornyl group, an isobornyl group, a norbornyl group, a dicyclopentanyl group, a dicyclopentenyl group, a benzyl group, a phenyl group, a naphthyl group, a 2-t-butylphenyl group, and residues obtained by removing one or more hydrogen atoms from these groups.

5. The fluorine-containing polymer according to any one of claims 1 to 4, wherein the monomer (b2) is a monomer, a homopolymer of which has a glass transition temperature of lower than 0°C, and is represented by formula:
CH₂=CX²-C (=O) -Y²-Z² ··· (b2-I)
wherein X² is a hydrogen atom, a monovalent organic group or a halogen atom,
Y² is -O- or -NH-, and
Z² is a linear or branched chain aliphatic hydrocarbon group having 1 to 30 carbon atoms.

6. The fluorine-containing polymer according to any one of claims 1 to 5, wherein the fluorine-free crosslinkable monomer (c) is a compound represented by formula:
CH₂=CX³-C (=O) -Y³-Z³-W3 ··· (c-I)
wherein X³ is a hydrogen atom, a methyl group or a halogen atom,
Y³ is a direct bond, -O- or -NH-,
Z³ is a direct bond or a divalent organic group, and
W³ is a hydroxyl group, an epoxy group, a chloromethyl group, a blocked isocyanate group, an amino group, a carboxyl group, a hydrazide group or a melamine group.

7. The fluorine-containing polymer according to claim 6, wherein the fluorine-free crosslinkable monomer (c) comprises both of
a compound of formula (c-I) wherein Z³ is a linear or branched chain alkylene group having 1 to 20 carbon atoms and W³ is a hydroxyl group, and
a compound of formula (c-I) having a carboxyl group.

8. The fluorine-containing polymer according to any one of claims 1 to 7, wherein an amount of the fluorine-containing monomer (a) is 30% by weight or less with respect to the polymer.

9. The fluorine-containing polymer according to any one of claims 1 to 8, wherein an amount of the fluorine-free non-crosslinkable monomer (b) is 10 to 75% by weight with respect to the polymer, and an amount of the fluorine-free crosslinkable monomer (c) is 10 to 75% by weight with respect to the polymer.

10. The fluorine-containing polymer according to any one of claims 1 to 9, wherein a weight ratio of the monomer (b1) and the monomer (b2) is 100: 5 to 100: 100.

11. A coating composition, comprising
(1) the fluorine-containing polymer according to any one of claims 1 to 10, and
(2) a liquid medium.

12. The coating composition according to claim 11, comprising (4) a curing agent,
wherein the curing agent (4) is a polyisocyanate compound, and an equivalent ratio (NCO/OH) of an isocyanate group in the polyisocyanate compound to a hydroxyl group in the fluorine-containing polymer is 0.5 to 2.5.

13. A method for producing a coated article, comprising coating an article with the coating composition according to claim 11 or 12.

14. A coated article having a coating film having a thickness of 30 µm or less formed from the coating composition of claim 11 or 12.
